# EUROPÄISCHE PATENTSCHRIFT

(11) **EP 4 168 757 B1**
(45) Veröffentlichungstag und Bekanntmachung des Hinweises auf die Patenterteilung: **22.05.2024**
(21) Anmeldenummer: 21733786.4
(22) Anmeldetag: 16.06.2021
(51) Int. Cl.: G01F 23/296, G01N 11/16, G01N 9/00

(54) **VIBRONISCHER MULTISENSOR**
VIBRONIC MULTISENSOR
MULTICAPTEUR VIBRONIQUE

(30) Priorität: 19.06.2020 DE 102020116278
(43) Veröffentlichungstag der Anmeldung: 26.04.2023
(73) Patentinhaber: Endress+Hauser SE+Co. KG, 79689 Maulburg (DE)
(72) Erfinder: ROSENHEIM, Julia, 79664 Wehr (DE); BRENGARTNER, Tobias, 79312 Emmendingen (DE); SCHLEIFERBÖCK, Jan, 79595 Rümmingen (DE); MACK, Benjamin, 79539 Lörrach (DE); OTTERSBACH, Pablo, 45149 Essen (DE)
(74) Vertreter: Koslowski, Christine Adelheid
(86) Internationale Anmeldenummer: PCT/EP2021/066257
(87) Internationale Veröffentlichungsnummer: WO 2021/255101

(56) Entgegenhaltungen:
- DE-A1-102006 007 199
- DE-A1-102017 130 530
- DE-A1-102018 127 526
- US-A- 5 369 600

## Beschreibung

Die Erfindung betrifft eine Vorrichtung zur Bestimmung und/oder Überwachung von zumindest einer Prozessgröße eines Mediums mit den Merkmalen des Oberbegriffs des ersten Anspruchs. Ferner betrifft die vorliegende Erfindung ein Verfahren zur Bestimmung und/oder Überwachung der zumindest einen Prozessgröße des Mediums mit den Merkmalen des Oberbegriffs des fünften Anspruchs. Das Medium befindet sich in einem Behältnis, beispielsweise in einem Behälter oder in einer Rohrleitung. Eine gattungsgemäße Vorrichtung offenbart die DE 10 2018 127 526 A1.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Mit einem vibronischen Sensor lassen sich entsprechend mehrere Prozessgrößen bestimmen und für eine Charakterisierung des jeweiligen Prozesses heranziehen. In vielen Fällen werden für eine umfassende Prozessüberwachung und/oder -kontrolle allerdings weitere Informationen über den Prozess, insbesondere Kenntnis über weitere physikalische und/oder chemische Prozessgrößen und/oder -parameter benötigt. Dies kann beispielsweise durch die Integration weiterer Feldgeräte in den jeweiligen Prozess erreicht werden. Dann können die von den verschiedenen Messgeräten zur Verfügung gestellten Messwerte in einer den Geräten übergeordneten Einheit geeignet weiterverarbeitet werden.

Nun ist es aber so, dass die unterschiedlichen Messgeräte zum einen über unterschiedliche Messgenauigkeiten verfügen. Darüber hinaus können Drift- und/oder Alterungseffekte jeweils sehr unterschiedlich sein. Solche Effekte können aber die jeweilige Messung bzw. Prozessüberwachung und/oder -kontrolle erheblich erschweren bzw. ungenau machen. Darüber hinaus kann es schwierig sein, den jeweiligen Zustand der einzelnen Feldgeräte jeweils im fortlaufenden Betrieb festzustellen. So ist aus der DE 10 2018 127 526.9 ein vibronischer Multisensor bekannt geworden, mittels welchem sowohl das vibronische Messprinzip als auch das Ultraschall-Messprinzip zur Bestimmung und/oder Überwachung einer oder mehrerer Prozessgrößen möglich ist.

Der DE 10 2006 007 199 A1 lässt sich ein vibronischer Sensor mit einer Schwinggabel entnehmen, der als Grenzstandschalter ausgeführt ist. Da sich die Temperatur im Messraum auf die Resonanzfrequenz und damit auf das Schaltverhalten auswirkt, wird diese über einen Temperatursensor ermittelt, der sich im Sensor oder separat dazu in der Nähe der Schwinggabel befindet.

Die DE 10 2017 130 530 A1 offenbart einen vibronischen Sensor mit einem piezoelektrischen Element, dessen Kapazität als Maß für seine Polarisation ermittelt wird. In einer Ausgestaltung wird aus der Kapazität ein Temperaturwert gewonnen und mit dem Messwert eines separaten Temperatursensors verglichen. Damit findet beispielsweise eine gegenseitige Überwachung von Temperatursensor und vibronischem Sensor statt.

Unter Anwendung des Ultraschall-Messprinzips ist es beispielsweise bekannt, in einem geschlossenen Gefäß die Gasdichte und die Zuckerkonzentration einer Flüssigkeit zu ermitteln. Dabei werden auch die Temperatur des Gefäßes sowie der Umgebung ermittelt.

Ausgehend vom genannten Stand der Technik liegt der vorliegenden Erfindung die Aufgabe zugrunde, die Funktionalität und Messgenauigkeit eines derartigen vibronischen Sensors weiter zu vergrößern.

Diese Aufgabe wird gelöst durch die Vorrichtung nach Anspruch 1 sowie durch das Verfahren nach Anspruch 5.

Hinsichtlich der Vorrichtung wird die Aufgabe gelöst durch eine Vorrichtung zur Bestimmung und/oder Überwachung von zumindest einer Prozessgröße eines Mediums umfassend eine Sensoreinheit mit einer mechanisch schwingfähigen Einheit, zumindest einem ersten piezoelektrischen Element und mit einer Einheit zur Bestimmung und/oder Überwachung der Temperatur des Mediums, und eine Elektronik. Die Vorrichtung ist dazu ausgestaltet, die mechanisch schwingfähige Einheit mittels eines Anregesignals zu mechanischen Schwingungen anzuregen, die mechanischen Schwingungen der schwingfähigen Einheit zu empfangen und in ein erstes Empfangssignal umzuwandeln, ein Sendesignal auszusenden, und ein zweites Empfangssignals zu empfangen. Die Elektronik ist wiederum dazu ausgestaltet, anhand des ersten und/oder zweiten Empfangssignals die zumindest eine Prozessgröße zu bestimmen. Erfindungsgemäß umfasst die die Einheit zur Bestimmung und/oder Überwachung der Temperatur einen ersten und einen zweiten Temperatursensor, welcher erste und zweite Temperatursensor voneinander beabstandet angeordnet sind, wobei die Elektronik dazu ausgestaltet ist, anhand eines ersten und/oder zweiten von der Einheit empfangenen Temperatur-Empfangssignals des ersten und/oder zweiten Temperatursensors die Temperatur des Mediums zu bestimmen.

Bei der mechanisch schwingfähigen Einheit handelt es sich beispielsweise um eine Membran, einen Einstab, eine Anordnung von zumindest zwei Schwingelementen, oder um eine Schwinggabel. Das zumindest eine piezoelektrische Element kann beispielsweise im Bereich der schwingfähigen Einheit angeordnet sein. Es dient einerseits als Antriebs-/Empfangseinheit zur Erzeugung der mechanischen Schwingungen der mechanisch schwingfähigen Einheit, welche mittels des Anregesignals erzeugt werden. Die mechanischen Schwingungen wiederum werden im Falle, dass die schwingfähige Einheit von Medium bedeckt ist, von den Eigenschaften des Mediums beeinflusst, so dass anhand des ersten Empfangssignals, welches die Schwingungen der schwingfähigen Einheit repräsentiert, eine Aussage über die zumindest eine Prozessgröße generierbar ist.

Das piezoelektrische Element dient weiterhin der Erzeugung eines Sendesignals, welches in Form des zweiten Empfangssignals empfangen wird. Wenn das Sendesignal auf seinem Weg zumindest zeitweise und abschnittsweise das Medium durchläuft, wird es ebenfalls durch die physikalischen und/oder chemischen Eigenschaften des Mediums beeinflusst und kann entsprechend zur Bestimmung einer Prozessgröße des Mediums herangezogen werden.

Somit ist es im Rahmen der vorliegenden Erfindung möglich, zumindest zwei Messprinzipien in einer einzigen Vorrichtung zu realisieren. Die Sensoreinheit führt einerseits mechanische Schwingungen aus; zudem wird ein Sendesignal ausgesendet. In Reaktion auf die mechanischen Schwingungen und auf das Sendesignal werden zwei Empfangssignale empfangen und können beispielsweise hinsichtlich zumindest zwei unterschiedlicher Prozessgrößen ausgewertet werden. Die beiden Empfangssignale können dabei vorteilhaft unabhängig voneinander ausgewertet werden. So kann erfindungsgemäß die Anzahl ermittelbarer Prozessgrößen deutlich erhöht werden, was zu einer höheren Funktionalität des jeweiligen Sensors bzw. in einem erweiterten Anwendungsbereich resultiert.

Darüber hinaus umfasst die erfindungsgemäße Vorrichtung eine Einheit zur Bestimmung und/oder Überwachung der Temperatur des Mediums. Diese Einheit umfasst zwei voneinander beabstandet angeordnete Temperatursensoren, die mittels des gleichen oder mittels unterschiedlichen Temperatursignalen beaufschlagbar sind. Anhand des von der Einheit empfangenen ersten und/oder zweiten Temperatur-Empfangssignals kann dann die Temperatur des Mediums, beispielsweise als dritte Prozessgröße, ermittelt werden. Dadurch, dass die beiden Temperatursensoren voneinander beabstandet angeordnet werden, kann die Temperatur sehr genau bestimmt werden. Insbesondere kann eine inhomogene Temperaturverteilung im Bereich der Sensoreinheit aufgrund unterschiedlicher Wärmeleitfähigkeiten unterschiedlicher Komponenten der Sensoreinheit, des Mediums und des Behältnisses, sowie aufgrund unterschiedlicher Temperaturen der Umgebung der Vorrichtung und des Mediums, und aufgrund von Temperaturänderungen des Mediums oder der Umgebung der Vorrichtung berücksichtigt werden.

Die Temperatur sowohl der Umgebung als auch des Mediums hat einen erheblichen Einfluss auf unterschiedlichste andere Prozessgrößen des Mediums. Durch eine zusätzliche Bestimmung und/oder Überwachung der Temperatur, insbesondere an unterschiedlichen Positionen, kann die Messgenauigkeit des Multisensors demnach deutlich verbessert und die Funktionalität des Sensors erheblich erweitert werden.

Erfindungsgemäß ist der erste Temperatursensor derart angeordnet und/oder dazu ausgestaltet, eine erste Temperatur in einem ersten dem Medium zugewandten Endbereich der Sensoreinheit zu erfassen, und ist der zweite Temperatursensor derart angeordnet und/oder dazu ausgestaltet, eine zweite Temperatur in einem zweiten, dem Medium abgewandten Endbereich der Sensoreinheit, insbesondere in einem Bereich, in welchem das zumindest eine piezoelektrische Element angeordnet ist, zu erfassen.

Durch die erfindungsgemäße Erfassung der Temperatur in einem dem Medium zugewandten und einem dem Medium abgewandten Teilbereich der Sensoreinheit kann vorteilhaft eine Wärmeleitung im Bereich der Sensoreinheit ermittelt werden. Wie bereits erwähnt, hängen die mittels des Multisensors bestimmbaren Prozessgrößen erheblich von der Temperatur des Mediums und auch von der Temperatur der Sensoreinheit ab. Um eine hochgenaue und zuverlässige Bestimmung zu ermöglichen, ist eine genaue ortsaufgelöste Kenntnis des Temperaturprofils, welchem die Sensoreinheit ausgesetzt ist, von großer Wichtigkeit.

Zumindest einer der beiden Temperatursensoren kann zu diesem Zweck beispielsweise an oder in der Sensoreinheit angeordnet sein. Im Falle einer Sensoreinheit in Form einer Schwinggabel ist es beispielsweise denkbar, dass zumindest ein Temperatursensor an oder in einem der Schwingelemente positioniert ist. Beispielsweise kann ein Temperatursensor in einem dem Medium zugewandten Teilbereich eines der Schwingelemente und der andere Temperatursensor in einem dem Medium abgewandten Endbereich eines der Schwingelemente angeordnet sein.

In einer Ausgestaltung umfasst die Sensoreinheit zumindest ein erstes und ein zweites piezoelektrisches Element, wobei das erste und zweite piezoelektrische Element dazu ausgestaltet sind, die mechanisch schwingfähige Einheit mittels eines Anregesignals zu mechanischen Schwingungen anzuregen und die mechanischen Schwingungen der schwingfähigen Einheit zu empfangen und in ein erstes Empfangssignal umzuwandeln, wobei das erste piezoelektrische Element dazu ausgestaltet ist, ein Sendesignal auszusenden, und wobei das zweite piezoelektrische Element dazu ausgestaltet ist, das Sendesignal in Form eines zweiten Empfangssignals zu empfangen. Es können aber auch mehr als zwei piezoelektrische Elemente vorhanden sein, die an unterschiedlichen Positionen relativ zur schwingfähigen Einheit angeordnet sein können.

In einer weiteren Ausgestaltung handelt es sich bei der mechanisch schwingfähigen Einheit eine Schwinggabel mit einem ersten und einem zweiten Schwingelement, wobei das erste piezoelektrische Element zumindest teilweise in dem ersten Schwingelement und das zweite piezoelektrische Element zumindest teilweise in dem zweiten Schwingelement angeordnet ist. Entsprechende Ausgestaltungen einer Sensoreinheit sind beispielsweise in den Dokumenten DE102012100728A1 sowie in der DE102017130527A1 beschrieben worden. Auf beide Anmeldungen wird im Rahmen der vorliegenden Erfindung vollumfänglich Bezug genommen. Bei den in den beiden Dokumenten beschriebenen möglichen Ausgestaltungen der Sensoreinheit handelt es sich um beispielhafte mögliche konstruktive Ausgestaltungen der Sensoreinheit. Es ist beispielsweise nicht zwingend notwendig, die piezoelektrischen Elemente ausschließlich im Bereich der Schwingelemente anzuordnen. Vielmehr können einzelne der verwendeten piezoelektrischen Elemente auch im Bereich der Membran oder in weiteren nicht für die vibronische Anregung verwendeten Schwingelementen, welche ebenfalls auf der Membran aufgebracht sind, angeordnet sein.

Es ist ferner von Vorteil, wenn die Einheit zur Bestimmung und/oder Überwachung einer Temperatur ein stabförmiges Gehäuseelement umfasst, welches derart angeordnet ist, dass eine Längsachse des Gehäuseelements parallel zu einer Längsachse der schwingfähigen Einheit ist, und wobei der erste Temperatursensor in einem ersten, dem Medium zugewandten Endbereich des Gehäuseelements angeordnet ist, und wobei der zweite Temperatursensor in einem zweiten, dem Medium abgewandten Endbereich des Gehäuseelements angeordnet ist. Die Temperatursensoren sind also separat von der schwingfähigen Einheit positioniert. Eine derartige Ausgestaltung erleichtert es beispielsweise im Falle einer Sensoreinheit in Form einer Schwinggabel, eine symmetrische Ausgestaltung der beiden Schwingelemente zu gewährleisten.

Eine weitere Ausgestaltung der Vorrichtung beinhaltet, dass die Einheit zur Bestimmung und/oder Überwachung der Temperatur einen Temperatursensor in Form eines Widerstandselements oder eines Thermoelements umfasst.

Es ist grundsätzlich von Vorteil, wenn die Einheit zur Bestimmung und/oder Überwachung der Temperatur, insbesondere die beiden Temperatursensoren derart angeordnet ist, dass sie eine möglichst gute thermische Ankopplung zum Medium und/oder zur Sensoreinheit aufweisen. Um Einflüsse der Temperatur auf die jeweils bestimmten Prozessgrößen zu eliminieren, ist insbesondere eine thermische Kopplung zum Medium erforderlich. Dann ist es von Vorteil, wenn die beiden Temperatursensoren jeweils zumindest zeit- und/oder teilweise mit dem Medium in Kontakt kommen. Grundsätzlich ist eine räumliche Nähe zur Sensoreinheit zu bevorzugen. Es ist ebenfalls von Vorteil, wenn die Sensoreinheit so ausgestaltet ist, dass ihre thermische Kapazität möglichst gering ist. In diesem Falle ist eine Ansprechzeit bei der Temperaturbestimmung, im Falle einer Änderung der Temperatur des Mediums, gering.

Noch eine bevorzugte Ausgestaltung der Vorrichtung beinhaltet, dass die Sensoreinheit eine Einheit zur Bestimmung und/oder Überwachung eines Drucks und/oder eine Einheit zur Bestimmung und/oder Überwachung einer Leitfähigkeit und/oder Kapazität des Mediums umfasst. Durch die Implementierung weiterer Messprinzipien in einem einzigen Sensor können der Applikationsbereich sowie die Messgenauigkeiten des Sensors noch weiter verbreitert bzw. erhöht werden.

Die der Erfindung zugrunde liegende Aufgabe wird ferner gelöst durch ein Verfahren zur Bestimmung und/oder Überwachung zumindest einer Prozessgröße eines Mediums, wobei
- eine Sensoreinheit mittels eines Anregesignals zu mechanischen Schwingungen angeregt wird,
- die mechanischen Schwingungen von der Sensoreinheit empfangen und in ein erstes Empfangssignal umgewandelt werden,
- von der Sensoreinheit ein Sendesignal ausgesendet und ein zweites Empfangssignal empfangen wird,
- anhand des ersten und/oder zweiten Empfangssignals die zumindest eine Prozessgröße ermittelt wird, und
- anhand eines ersten und/oder eines zweiten von einem ersten und/oder zweiten Temperatursensor empfangenen Temperatur-Empfangssignals ein erster und/oder zweiter Wert für zumindest eine Temperatur ermittelt wird.

Erfindungsgemäß wird mittels des ersten Temperatursensors ein Wert für eine erste Temperatur in einem dem Medium zugewandten Endbereich der Sensoreinheit und/oder mittels des zweiten Temperatursensors ein Wert für eine zweite Temperatur in einem dem Medium abgewandten Endbereich der Sensoreinheit erfasst.

Das Verfahren ist insbesondere anwendbar für eine Vorrichtung nach einer der zuvor beschriebenen Ausgestaltungen. Es ist einerseits denkbar, dass die Sensoreinheit gleichzeitig mittels des Anregesignals und mittels des Sendesignals beaufschlagt wird, wobei das Anregesignal und das Sendesignal einander überlagert werden. Alternativ kann die Sensoreinheit aber auch abwechselnd mittels des Anregesignal und mittels des Sendesignals beaufschlagt werden.

Bei dem Anregesignal handelt es sich beispielsweise um ein elektrisches Signal mit zumindest einer vorgebbaren Frequenz, insbesondere um ein sinusförmiges oder um ein rechteckförmiges Signal.

Vorzugsweise wird die mechanisch schwingfähige Einheit zumindest zeitweise zu Resonanzschwingungen angeregt. Die mechanischen Schwingungen werden durch das die schwingfähige Einheit umgebende Medium beeinflusst, so dass anhand eines die Schwingungen repräsentierenden Empfangssignals Rückschlüsse auf verschiedene Eigenschaften des Mediums möglich sind.

Bei dem Sendesignal handelt es sich bevorzugt um ein, insbesondere gepulstes, Ultraschallsignal, insbesondere um zumindest einen Ultraschallpuls. Als zweites angewendetes Messverfahren wird demnach im Rahmen der vorliegenden Erfindung eine Ultraschall-basierte Messung durchgeführt. Das jeweils ausgesendete Sendesignal durchläuft zumindest teilweise das Medium und wird von diesem in seinen Eigenschaften beeinflusst. Entsprechend können anhand des jeweils empfangenen zweiten Empfangssignals ebenfalls Rückschlüsse auf verschiedene Medien gezogen werden.

Zur Temperaturbestimmung werden die beiden Temperatursensoren mittels dem gleichen oder mittels unterschiedlicher Temperatursignale beaufschlagt. Auch die Beaufschlagung mittels des zumindest einen Temperatursignals kann simultan oder alternierend zur Beaufschlagung der Sensoreinheit mit dem Anregesignal und/oder Sendesignal erfolgen.

Mit dem erfindungsgemäßen Verfahren ist eine Vielzahl unterschiedlicher Prozessgrößen mittels unterschiedlicher Messprinzipien ermittelbar. Darüber hinaus kann jeweils der Einfluss der Temperatur berücksichtigt werden. Die unterschiedlichen Prozessgrößen lassen sich vorteilhaft unabhängig voneinander bestimmen, so dass eine umfassende Analyse des jeweiligen Prozesses mittels eines einzigen Messgeräts ermöglicht wird. Dadurch, dass dieselbe Sensoreinheit für mehrere Messverfahren zum Einsatz kommt, kann darüber hinaus die Genauigkeit der Messungen deutlich erhöht werden. Darüber hinaus kann anhand der verschiedenen Messprinzipien eine Zustandsüberwachung der Vorrichtung vorgenommen werden. In dieser Hinsicht sind zahlreiche Ausgestaltungen für das erfindungsgemäße Verfahren möglich, von denen einige bevorzugte Varianten nachfolgend angegeben werden.

Eine Ausgestaltung des Verfahrens beinhaltet, dass zumindest zwei unterschiedliche Prozessgrößen ermittelt werden, wobei eine erste Prozessgröße anhand des ersten Empfangssignals ermittelt wird, und wobei eine zweite Prozessgröße anhand des zweiten Empfangssignals ermittelt wird.

Eine weitere Ausgestaltung beinhaltet, dass es sich bei der zumindest einen Prozessgröße um einen vorgebbaren Füllstand, die Dichte, die Viskosität, die Schallgeschwindigkeit oder eine aus zumindest einer dieser Größen abgeleitete Größe handelt. Besonders bevorzugt wird anhand des ersten Empfangssignals die Dichte und/oder Viskosität des Mediums und anhand des zweiten Empfangssignals die Schallgeschwindigkeit innerhalb des Mediums bestimmt. Es versteht sich jedoch von selbst, dass neben den hier explizit genannten Prozessgrößen auch weitere Prozessgrößen und/oder -parameter, welche mittels der beiden durchgeführten Messungen zugänglich sind, ebenfalls bestimmt und für eine Charakterisierung des jeweiligen Prozesses herangezogen werden können.

In einer Ausgestaltung des Verfahrens wird ein Einfluss der Temperatur des Mediums auf das erste und/oder zweite Empfangssignal bzw. auf die erste und/oder zweite Prozessgröße kompensiert. Hier sind unterschiedlichste Varianten denkbar, welche alle unter die vorliegende Erfindung fallen. Beispielsweise kann mittels eines der beiden Temperatur-Empfangssignale der Einfluss der Temperatur auf eines der beiden Empfangssignale und mittels des anderen Temperatur-Empfangssignals der Einfluss der Temperatur auf das jeweils andere Empfangssignal kompensiert werden. Auch ist es möglich mittels eines Temperatur-Empfangssignals den Einfluss der Temperatur auf beiden Empfangssignale zu kompensieren, oder mittels der beiden Temperatur-Empfangssignale jeweils den Einfluss auf jedes der beiden Empfangssignale zu kompensieren.

In einer Ausgestaltung des Verfahrens wird jeweils eine der Temperaturen zur Ermittlung jeweils einer der Prozessgrößen herangezogen. Beispielsweise hat die Temperatur in einem dem Medium zugewandten Endbereich der Sensoreinheit, insbesondere im Falle einer schwingfähigen Einheit in Form einer Schwinggabel, einen erheblichen Einfluss auf die mittels des Sensors bestimmten Werte für die Dichte und Viskosität. Beide Prozessgrößen ändern sich nicht nur in Abhängigkeit des Mediums, sondern auch in Abhängigkeit der Temperatur. Eine genaue Kenntnis der Temperatur in dem Bereich der Sensoreinheit, welcher gegenüber der Dichte und Viskosität empfindlich ist, sorgt somit für eine deutliche Erhöhung der Messgenauigkeit hinsichtlich dieser Prozessgrößen. In vielen Fällen wird diese Temperatur in einem dem Medium zugewandten Bereich der Sensoreinheit sich jedoch von einer Temperatur in einem dem Medium abgewandten Endbereich der Sensoreinheit, unter anderem aufgrund von Wärmeleitung aus dem Prozess an die Umgebung oder umgekehrt, unterscheiden. Ist das zumindest eine piezoelektrische Element beispielsweise in diesem dem Medium abgewandten Endbereich angeordnet, so wird auch eine Schallgeschwindigkeit in diesem dem Medium abgewandten Endbereich bestimmt. Da die Schallgeschwindigkeit ebenfalls eine Abhängigkeit von der Temperatur aufweist, ist es sinnvoll, zur Kompensation des Einflusses der Temperatur auf die Schallgeschwindigkeit die Temperatur in diesem dem Medium abgewandten Endbereich der Sensoreinheit ebenfalls mit hoher Genauigkeit zu bestimmen. Zwei voneinander beabstandete Temperatursensoren erhöhen somit für dieses genannte Beispiel die erzielbare Messgenauigkeit hinsichtlich der ermittelten Prozessgrößen erheblich.

Noch eine Ausgestaltung des Verfahrens beinhaltet, dass anhand des ersten und/oder zweiten Temperatur-Empfangssignals ein Einfluss der Temperatur auf zumindest eine physikalische und/oder chemische Eigenschaft zumindest einer Komponente der Sensoreinheit, von welcher Eigenschaft die zumindest eine Prozessgröße abhängt, kompensiert wird. An das zuvor genannte Beispiel anknüpfend, werden beispielsweise die Dichte und/oder Viskosität anhand der mechanischen Schwingungen der mechanisch schwingfähigen Einheit ermittelt. Die schwingfähige Einheit wird dazu beispielsweise zu resonanten Schwingungen angeregt. Die Resonanzfrequenz ist dabei abhängig vom Elastizitätsmodul der schwingfähigen Einheit, welches wiederum ebenfalls von der Temperatur abhängt. Auch hier ist somit eine genaue Kenntnis der Temperatur von großem Wert zur Erhöhung der Messgenauigkeit. Im Falle einer schwingfähigen Einheit wird die Resonanzfrequenz beispielsweise maßgeblich von dem dem Medium abgewandten Teilbereich der Sensoreinheit, dem Wurzelbereich der Schwingelemente, beeinflusst.

Noch eine Ausgestaltung sieht vor, dass anhand der Temperatur des Mediums eine Aussage über einen Prozess, den das Medium durchläuft, gemacht wird. Beispielsweise kann anhand der jeweils bestimmten Temperatur ein Mischvorgang unterschiedlicher Medien mit unterschiedlichen Temperaturen erkannt und/oder überwacht werden. In diesem Falle kann es kurzfristig zur kurzfristigen Fluktuation der Temperatur des Gemischs kommen, welche die Bestimmung der jeweiligen Prozessgröße negativ beeinflussen können. Ebenfalls kann erkannt werden, ob ein entsprechender Sensor außerhalb eines zulässigen Arbeitsbereichs für die Temperatur betrieben wird. Noch eine mögliche Aussage ist die Erkennung eines Reinigungsprozesses, welcher für den jeweiligen Sensor durchgeführt. Bei einem Reinigungsprozess können die unterschiedlichen Reinigungszyklen erkannt und/oder überwacht werden. Häufig folgen Behandlungen der Sensoreinheit bei hohen Temperaturen, beispielsweise mit Heißwasserdampf, Kaltwasserspülungen, welche mit großen Temperaturänderungen der mittels der Einheit zur Bestimmung und/oder Überwachung der Temperatur ermittelten Temperaturen einhergehen. Es ist ebenfalls denkbar, während einzelner Prozessschritte bei einem Reinigungsprozess eine Kalibration der Sensoreinheit durchzuführen, beispielsweise während eines Kaltspülvorgangs.

In einer Ausgestaltung des Verfahrens wird anhand einer elektromechanischen Effizienz oder einer Kapazität zumindest eines piezoelektrischen Elements der Sensoreinheit ein Wert für die erste und/oder zweite Temperatur ermittelt wird. Die Bestimmung der Temperatur anhand der elektromechanischen Effizienz eines piezoelektrischen Elements ist beispielsweise detailliert im Dokument DE102016120326A1 beschrieben, auf welches im Rahmen der vorliegenden Erfindung vollumfänglich Bezug genommen wird. Auch eine Bestimmung der Temperatur anhand der Kapazität eines piezoelektrischen Elements ist an sich aus dem Stand der Technik bekannt.

Es ist dann von Vorteil, wenn der anhand des ersten und/oder zweiten Temperatur-Empfangssignals und der anhand der elektromechanischen Effizienz oder der Kapazität ermittelte Wert für die erste und/oder zweite Temperatur miteinander verglichen werden, und wobei insbesondere im Falle, dass eine Abweichung zwischen den anhand des ersten und/oder zweiten Temperatur-Empfangssignals und der anhand der elektromechanischen Effizienz oder der Kapazität ermittelten Werten einen vorgebbaren Grenzwert überschreitet, eine Aussage über das zumindest eine piezoelektrische Element oder des ersten und/oder zweiten Temperatursensors gemacht wird. Es ist somit ebenfalls eine Diagnose der Sensoreinheit anhand der ermittelten Werte für die Temperatur möglich.

Die Diagnose kann beispielsweise einerseits eine Aussage über die Einheit zur Bestimmung und/oder Überwachung der Temperatur, insbesondere über den ersten und/oder zweiten Temperatursensor, oder eine Aussage über den Zustand des ersten und/oder zweiten piezoelektrischen Elements beinhalten. Vorteilhaft kann auf diese Weise ein Plausibilitätscheck einzelner angewendeter Messprinzipien, insbesondere der beiden Empfangssignale, sowie der von der Einheit zur Bestimmung und/oder Überwachung der Temperatur empfangenen Temperatur-Empfangssignale durchgeführt werden.

Noch eine Ausgestaltung des erfindungsgemäßen Verfahrens beinhaltet, dass anhand einer Differenz der anhand des ersten und zweiten Temperatur-Empfangssignals ermittelten Werte für die erste und zweite Temperatur eine Wärmeableitung, insbesondere ein Wärmeableitung im Bereich der Sensoreinheit ermittelt wird, wobei insbesondere im Falle, dass die Differenz einen vorgebbaren Grenzwert überschreitet, eine Warnung ausgegeben wird.

Die beiden Temperatursensoren können demnach auch gegeneinander abgeglichen werden. Auch kann ein Abgleich der anderen Messprinzipien gegeneinander vom jeweils vorherrschenden ortsaufgelösten Temperaturprofil im Bereich der Sensoreinheit abhängig gemacht werden. Zudem ist es denkbar, eine maximal zulässige Differenz zwischen einer Umgebungstemperatur und der Temperatur des Mediums, welche ein zuverlässiges Arbeiten einer entsprechenden Vorrichtung garantiert festzulegen, und im Falle, dass die Differenz diesen Grenzwert überschreitet, eine Warnung auszugeben.

Es ist weiterhin von Vorteil, wenn anhand der Schallgeschwindigkeit ein Referenzwert für die Dichte ermittelt wird, wobei der Referenzwert mittels eines aus dem ersten Empfangssignals ermittelten Wertes für die Dichte verglichen wird. Vorzugsweise wird anhand der aus dem zweiten Empfangssignal ermittelten Schallgeschwindigkeit eine Konzentration einer in einem Referenzmedium gelösten Referenzsubstanz in einem vorgebbaren Behälter ermittelt. Aus der Konzentration kann anschließend der Referenzwert für die Dichte des Referenzmediums ermittelt werden. Zudem kann ein Messwert für die Dichte aus dem ersten Empfangssignal ermittelt werden. Die beiden Werte für die Dichte können dann miteinander verglichen werden. Insbesondere kann der aus dem ersten Empfangssignal ermittelte Wert für die Dichte anhand des aus dem zweiten Empfangssignals ermittelten Referenzwerts für die Dichte justiert werden. Auf diese Weise kann eine nachteilige Beeinflussung der Geometrie des jeweils verwendeten Behältnisses auf die vibronische Bestimmung der Dichte kompensiert werden.

Noch eine besonders bevorzugte Ausgestaltung beinhaltet, dass anhand des ersten und zweiten Empfangssignals und/oder anhand der ersten und zweiten Prozessgröße eine erste Konzentration einer ersten in dem Medium enthaltenen Substanz und eine zweite Konzentration einer zweiten in dem Medium enthaltenen Substanz ermittelt wird. Gemäß Stand der Technik sind für eine derartige Analyse des Mediums auf zwei unterschiedliche Substanzen hin in der Regel zwei separate Messgeräte erforderlich, welche unterschiedliche Messgrößen bereitstellen. Erfindungsgemäß kann dagegen mittels einer einzigen Vorrichtung zuverlässig eine Aussage über zwei unterschiedliche Komponenten in einem Medium getätigt werden.

Eine bevorzugte Verwendung des Verfahrens betrifft die Überwachung eines Gärprozesses. Bei einer Gärung wird Zucker in Ethanol umgewandelt. Um eine qualitative Überwachung gewährleisten zu können, ist es deshalb erforderlich, sowohl die Konzentration von Zucker als auch von Ethanol zu bestimmen. Dies ist im Rahmen der vorliegenden Erfindung möglich.

Schließlich beinhaltet eine vorteilhafte Ausgestaltung des Verfahrens, dass anhand des ersten und zweiten Empfangssignals und/oder anhand der ersten und zweiten Prozessgröße ermittelt wird, ob sich ein Ansatz an der Sensoreinheit gebildet hat und/oder ob eine Drift und/oder Alterung der Sensoreinheit vorliegt. Die beiden Empfangssignale verhalten sich üblicherweise jeweils unterschiedlich in Abhängigkeit eines Ansatzes an der Sondeneinheit, einer Drift oder einer Alterung im Bereich der Sensoreinheit. Das Vorhandensein eines Ansatzes, einer Drift oder einer Alterung kann entsprechend beispielsweise anhand einer zeitlichen Betrachtung der beiden Empfangssignale und/oder Prozessgrößen festgestellt werden.

Es ist von Vorteil, wenn das erste und zweite Empfangssignal, die erste und zweite Prozessgröße und/oder ein zeitlicher Verlauf des ersten und zweiten Empfangssignals und/oder der ersten und zweiten Prozessgröße miteinander verglichen werden. Aus dem Vergleich kann dann auf das Vorhandensein eines Ansatzes, auf eine Drift oder eine Alterung der Sensoreinheit geschlossen werden. Da zumindest zwei Empfangssignale bzw. Prozessgrößen zugänglich sind, kann eine hohe Genauigkeit hinsichtlich der jeweils getroffenen Aussagen über einen Ansatz, eine Drift oder eine Alterung erzielt werden. Durch die erfindungsgemäße Realisierung zweier unterschiedlicher Messungen mit einer einzigen Sensoreinheit kann entsprechend das Vorhandensein von Ansatz, oder auch einer Drift oder eine Alterung der Sensoreinheit zuverlässig erkannt werden.

In einer weiteren, besonders bevorzugten Ausgestaltung wird bei der Bestimmung und/oder Überwachung zumindest einer Prozessgröße oder bei der Bestimmung einer aus zumindest einer Prozessgröße und/oder zumindest einem Empfangssignal abgeleiteten Größe ein Einfluss eines Ansatzes einer Drift und/oder einer Alterung der Sensoreinheit auf das erste und/oder zweite Empfangssignal reduziert oder kompensiert. Der Einfluss eines Ansatzes, einer Drift und/oder Alterung der Sensoreinheit kann demnach bei der Bestimmung und/oder Überwachung der jeweiligen Prozessgröße berücksichtigt werden, so dass die jeweilige Prozessgröße ohne auf dem Vorhandensein eines Ansatzes, einer Drift und/oder Alterung bestimmt werden kann. Zur Reduzierung oder zur Kompensation des Einflusses kann beispielsweise ein geeigneter, insbesondere prozessabhängiger, Algorithmus hinterlegt werden, anhand dessen ein nicht durch den Einfluss des Ansatzes, der Drift und/oder Alterung der Sensoreinheit verfälschter Wert für die jeweilige Prozessgröße ermittelbar ist. Somit kann eine verbesserte Messgenauigkeit erreicht sowie eine Möglichkeit zur vorausschauenden Wartung (engl. predictive maintenance) bereitgestellt werden.

Es sei darauf verwiesen, dass die im Zusammenhang mit der erfindungsgemäßen Vorrichtung beschriebenen Ausgestaltungen sich mutatis mutandis auch auf das erfindungsgemäße Verfahren anwenden lassen und umgekehrt.

Die Erfindung wird anhand der nachfolgenden Figuren näher erläutert. Es zeigt:
Fig. 1: eine schematische Skizze eines vibronischen Sensors gemäß Stand der Technik,
Fig. 2 mehrere mögliche, an sich aus dem Stand der Technik bekannte, Ausgestaltungen einer Sensoreinheit, welche zur Durchführung des erfindungsgemäßen Verfahrens geeignet sind, und
Fig. 3 eine mögliche Ausgestaltung einer erfindungsgemäßen Vorrichtung mit einer Einheit zur Bestimmung der Temperatur des Mediums.

In den Figuren sind gleiche Elemente jeweils mit demselben Bezugszeichen versehen.

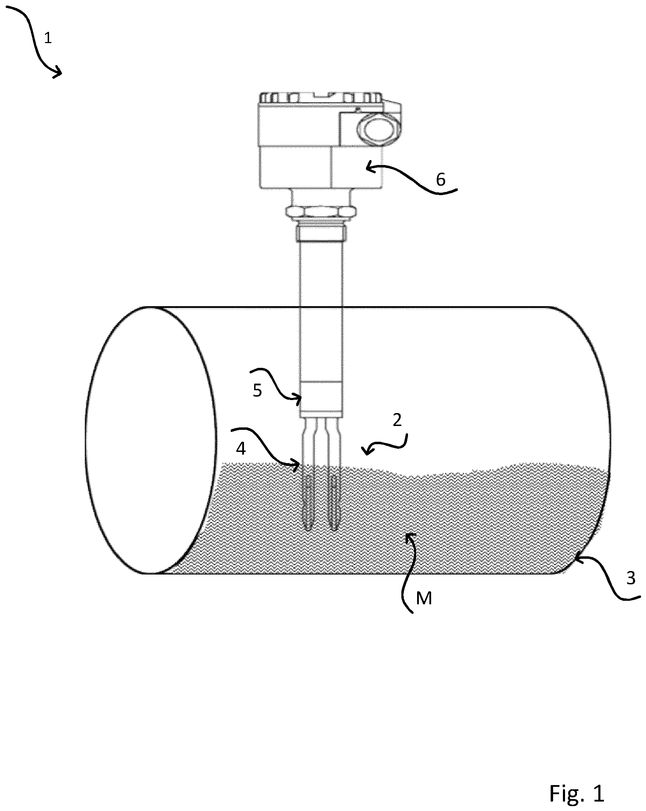

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs-/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

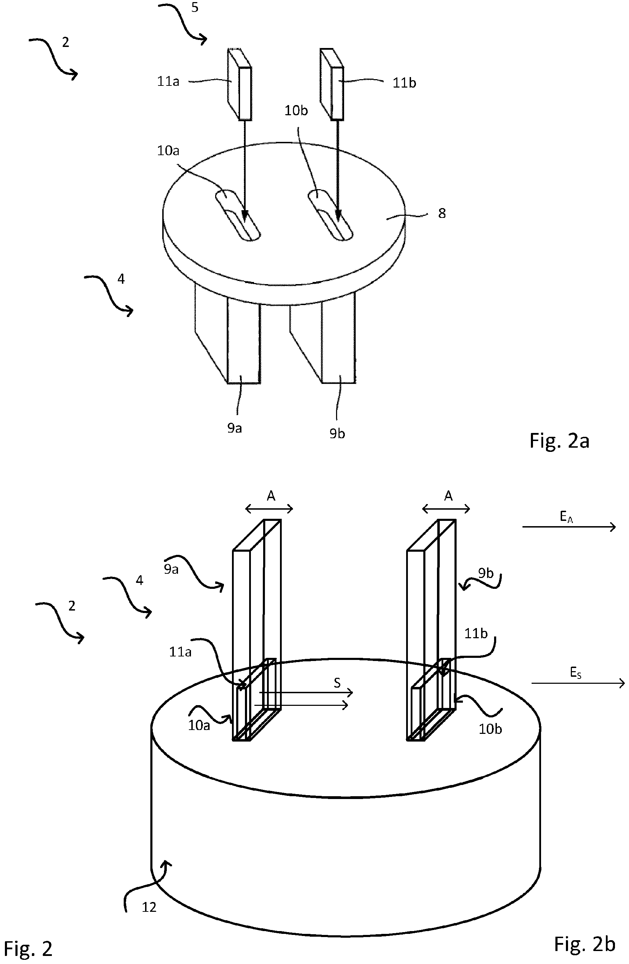

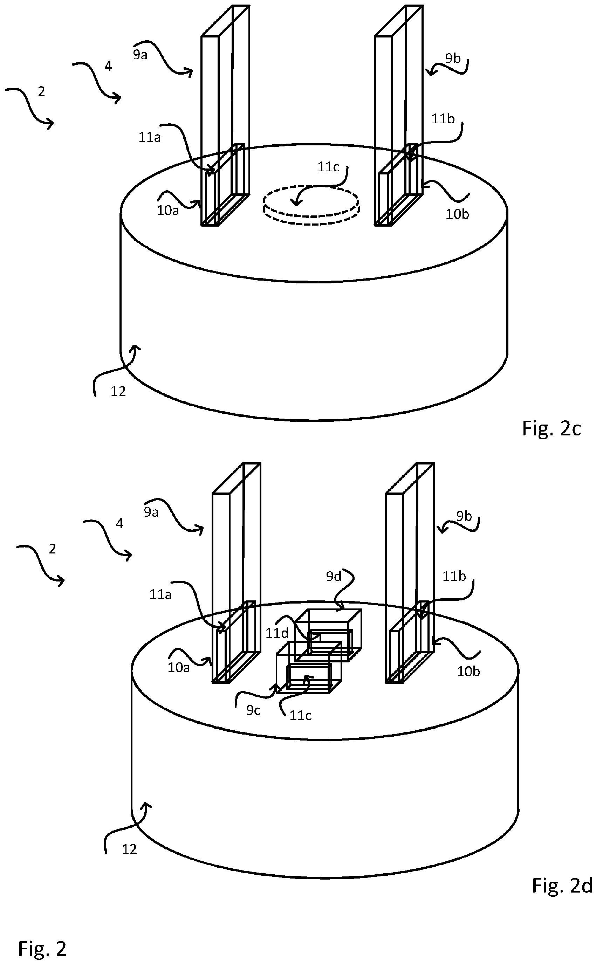

In Fig. 2 sind beispielhaft verschiedene Sensoreinheiten 2 gezeigt, welche sich zur Durchführung eines erfindungsgemäßen Verfahrens eignen. Die in Fig. 2a gezeigte mechanisch schwingfähige Einheit 4 umfasst zwei an einer Basis 8 angebrachte Schwingelemente 9a,9b, welche mithin auch als Gabelzinken bezeichnet werden. Optional kann an den Endseiten der beiden Schwingelemente 9a,9b außerdem jeweils ein Paddel angeformt sein [hier nicht gezeigt]. In jedem der beiden Schwingelemente 9a,9b ist jeweils ein, insbesondere taschenartiger, Hohlraum 10a, 10b eingebracht, in welchem jeweils zumindest ein piezoelektrisches Element 11a, 11b der Antriebs-/Empfangseinheit 5 angeordnet ist. Vorzugsweise sind die piezoelektrischen Elemente 11a und 11b innerhalb der Hohlräume 10a und 10b vergossen. Die Hohlräume 10a, 10b können dabei so beschaffen sein, dass sich die beiden piezoelektrischen Elemente 11a, 11b vollständig oder teilweise im Bereich der beiden Schwingelemente 9a, 9b befinden Eine solche sowie ähnliche Anordnungen sind in der DE102012100728A1 ausführlich beschrieben.

Eine weitere beispielhafte, mögliche Ausgestaltung einer Sensoreinheit 2 ist in Fig. 2b dargestellt. Die mechanisch schwingfähige Einheit 4 verfügt über zwei parallel zueinander ausgerichtete, hier stabförmig ausgestaltete, auf einem scheibenförmigen Element 12 angebrachte, Schwingelemente 9a, 9b, welche getrennt voneinander zu mechanischen Schwingungen anregbar sind, und bei denen die Schwingungen ebenfalls getrennt voneinander empfangen und ausgewertet werden können. Beide Schwingelemente 9a und 9b weisen jeweils einen Hohlraum 10a und 10b auf, in welchen im dem scheibenförmigen Element 12 zugewandten Bereich jeweils zumindest ein piezoelektrisches Element 11a und 11b angeordnet ist. Bezüglich der Ausgestaltung gemäß Fig. 2b sei wiederum ferner auf in die bisher unveröffentlichte deutsche Patentanmeldung mit dem Aktenzeichen DE102017130527A1 verwiesen.

Wie in Fig. 2b schematisch eingezeichnet, wird erfindungsgemäß die Sensoreinheit 2 einerseits mit einem Anregesignal A beaufschlagt, derart, dass die schwingfähige Einheit 4 zu mechanischen Schwingungen angeregt wird. Die Schwingungen werden dabei vermittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals A₁ und des zweiten Schwingelements 11b mittels eines zweiten Anregesignals A₂. Ebenso ist es sowohl denkbar, dass anhand der mechanischen Schwingungen ein erstes Empfangssignal E_{A}, oder von jedem Schwingelement 9a,9b ein separates Empfangssignal E_{A1} bzw. E_{A2} empfangen wird.

Darüber hinaus wird vom ersten piezoelektrischen Element 11a ausgehend ein Sendesignal S ausgesendet, welches von dem zweiten piezoelektrischen Element 11b in Form eines zweiten Empfangssignals Es empfangen wird. Da die beiden piezoelektrischen Elemente 11a und 11b zumindest im Bereich der Schwingelemente 9a und 9b angeordnet sind, durchläuft das Sendesignal S das Medium M, sofern die Sensoreinheit 2 mit dem Medium M in Kontakt ist und wird entsprechend von den Eigenschaften des Mediums M beeinflusst. Vorzugsweise handelt es sich bei dem Sendesignal S um ein, insbesondere gepulstes, Ultraschallsignal, insbesondere um zumindest einen Ultraschallpuls. Ebenso ist es aber denkbar, dass das Sendesignal S von dem ersten piezoelektrischen Element 11a im Bereich des ersten Schwingelements 9a ausgesendet wird und an dem zweiten Schwingelement 9b reflektiert wird. In diesem Falle wird das zweite Empfangssignal Es vom ersten piezoelektrischen Element 11a empfangen. Das Sendesignal S durchläuft in diesem Falle das Medium M zweimal, was zu einer Verdoppelung einer Laufzeit τ des Sendesignals S führt.

Neben diesen beiden gezeigten Ausgestaltungen einer erfindungsgemäßen Vorrichtung 1 sind noch zahlreiche weitere Varianten denkbar, welche ebenfalls unter die vorliegende Erfindung fallen. Beispielsweise ist es für die Ausgestaltungen gemäß der Figuren Fig. 2a und Fig. 2b möglich, lediglich ein piezoelektrisches Element 11a, 11b zu verwenden und zumindest in einem der beiden Schwingelemente 9a, 9b anzuordnen. In diesem Falle dient das piezoelektrische Element 9a zur Erzeugung des Anregesignals, und des Sendesignals S, sowie zum Empfangen des ersten E₁ und zweiten Empfangssignals E₂. Das Sendesignal wird in diesem Falle an dem zweiten Schwingelement 9b ohne piezoelektrisches Element 11b reflektiert.

Eine weitere, beispielhafte Möglichkeit ist in Fig. 2c dargestellt. Hier ist ein drittes piezoelektrisches Element 11c im Bereich der Membran 12 vorgesehen. Das dritte piezoelektrische Element 11c dient der Erzeugung des Anregesignals A und zum Empfangen des ersten Empfangssignals E₁; das erste 11a und zweite piezoelektrische Element 11b dienen der Erzeugung des Sendesignals S bzw. dem Empfangen des zweiten Empfangssignals E₂. Alternativ ist es beispielsweise möglich, mit dem ersten 11a und/oder zweiten piezoelektrischen Element 11b das Anregesignal A und das Sendesignal S zu erzeugen sowie das zweite Empfangssignal E₂ zu empfangen, wobei das dritte piezoelektrische Element 11c zum Empfangen des ersten Empfangssignals E₁ dient. Ebenso ist es möglich, mit dem ersten 11a und/oder zweiten piezoelektrischen Element 11b das Sendesignal S und mit dem dritten piezoelektrischen Element 11c das Anregesignal A zu erzeugen und mit dem ersten 11a und/oder zweiten piezoelektrischen Element 11b das erste E₁ und/oder zweite Empfangssignal E₂ zu empfangen. Auch im Falle der Fig. 2c ist es für andere Ausgestaltungen möglich, auf das erste 11a oder zweite piezoelektrische Element 11b zu verzichten.

Noch eine mögliche Ausgestaltung der Vorrichtung 1 ist Gegenstand von Fig. 2d. Die Vorrichtung umfasst ausgehend von der Ausgestaltung aus Fig. 2b ein drittes 9c und ein viertes Schwingelement 9d. Diese dienen jedoch nicht einer Schwingungserzeugung. Vielmehr ist in den zusätzlichen Elemente 9c, 9d jeweils ein drittes 11c und viertes piezoelektrisches Element 11d angeordnet. In diesem Falle wird die vibronische Messung mittels der ersten beiden piezoelektrischen Elemente 11a, 11b und die Ultraschallmessung mittels der anderen beiden piezoelektrischen Elemente 11c, 11d durchgeführt. Auch hier kann je Messprinzip auf ein piezoelektrisches Element, z. B. 11b und 11d verzichtet werden. Aus Symmetriegründen ist es dagegen vorteilhaft, stets zwei zusätzliche Schwingelemente 9c, 0d zu verwenden.

Das erste E_{A} und zweite Empfangssignal Es resultieren aus unterschiedlichen Messverfahren und können unabhängig voneinander hinsichtlich zumindest einer Prozessgröße P ausgewertet werden. In dieser Hinsicht sei auf die bisher unveröffentlichte deutsche Patentanmeldung mit dem Aktenzeichen 102018127526.9 verwiesen, auf welche im Rahmen der vorliegenden Erfindung vollumfänglich Bezug genommen wird.

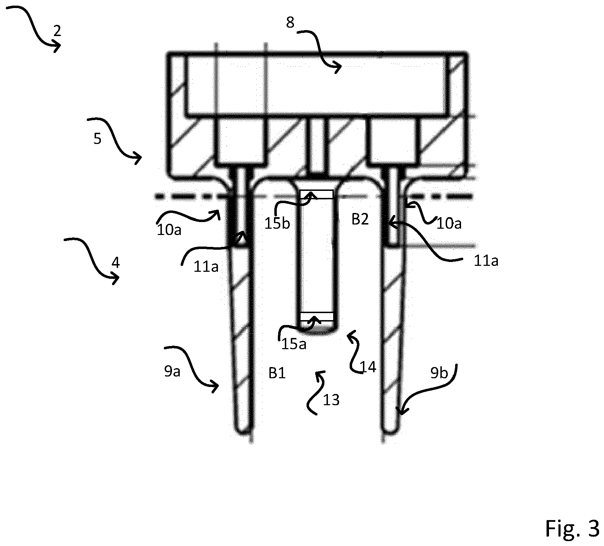

Darüber hinaus kann erfindungsgemäß die Temperatur T hochgenau und zuverlässig ermittelt und deren Einfluss auf die jeweils bestimmten Prozessgrößen kompensiert werden. Hierzu verfügt die erfindungsgemäße Vorrichtung über eine Einheit zur Bestimmung und/oder Überwachung der Temperatur, wie in Fig. 3 illustriert. Für das gezeigte Beispiel ist die Sensoreinheit 2 analog zur Variante aus Fig. 2a ausgestaltet.

Zwischen den beiden Schwingelementen 9a und 9b ist die Einheit 13 zur Bestimmung und/oder Überwachung der Temperatur T des Mediums angeordnet, welche ein stabförmiges Gehäuseelement 14 umfasst, in welcher ein erster Temperatursensor 15a und ein zweiter Temperatursensor 15b voneinander beabstandet angeordnet sind. Die Temperatursensoren können beispielsweise in Form von Widerstandselementen oder Thermoelementen ausgeführt sein. Der erste Temperatursensor 15a ist dazu ausgestaltet, eine erste Temperatur T1 in einem dem Medium M zugewandten Endbereich B1 der Sensoreinheit 2 zu ermitteln, während der zweite Temperatursensor 15b dazu ausgestaltet ist, eine zweite Temperatur T2 in einem dem Medium M abgewandten Endbereich B2 der Sensoreinheit 2 zu ermitteln. Die erste und zweite Temperatur T1 und T2 unterscheiden sich üblicherweise voneinander aufgrund von unterschiedlichen Temperaturen des Mediums und der Umgebung. Um alle verfügbaren Prozessgrößen hochgenau bestimmen zu können, ist somit eine Kenntnis des ortsaufgelösten Temperaturprofils der Sensoreinheit 2 von großer Wichtigkeit. Durch die Temperaturbestimmung an unterschiedlichen Positionen kann die erzielbare Messgenauigkeit des Multisensors 1 erheblich erhöht werden und es kann darüber hinaus eine weiterführend Diagnosefunktion bereitgestellt werden.

Alternative hier nicht separat gezeigte Varianten für eine erfindungsgemäße Vorrichtungen 1 können beispielsweise derart beschaffen sein, dass zumindest ein Temperatursensor 15a, 15b im Bereich eines Schwingelements 9a, 9b oder im Bereich der Basis 8 angeordnet sind. Auch ist es denkbar, mehr als zwei Temperatursensoren 15 zu verwenden, die voneinander beabstandet positioniert sind.

### Bezugszeichenliste

- 1: Vibronischer Sensor
- 2: Sensoreinheit
- 3: Behälter
- 4: Schwingfähige Einheit
- 5: Antriebs-/Empfangseinheit
- 6: Elektronik
- 8: Basis
- 9a, 9b: Schwingelemente
- 10a, 10b: Hohlräume
- 11a, 11b: piezoelektrische Elemente
- 12: scheibenförmiges Element
- 13: Einheit zur Bestimmung und/oder Überwachung der Temperatur
- 14: stabförmiges Gehäuseelement
- 15, 15a, 15b: Temperatursensoren
- M: Medium
- P: Prozessgröße
- T, T1, T2: Temperaturen
- A: Anregesignal
- S: Sendesignal
- E_{A}: erstes Empfangssignal
- Es: zweites Empfangssignal
- E_{T}: drittes Empfangssignal
- ΔΦ: vorgebbare Phasenverschiebung

## Patentansprüche

1. Vorrichtung (1) zur Bestimmung und/oder Überwachung von zumindest einer Prozessgröße (P) eines Mediums (M) umfassend
eine Sensoreinheit (2) mit
einer mechanisch schwingfähigen Einheit (4), und
zumindest einem ersten piezoelektrischen Element (11a),
und mit
einer Elektronik (6)
wobei die Vorrichtung (1) dazu ausgestaltet ist,
die mechanisch schwingfähige Einheit (4) mittels eines Anregesignals (A) zu mechanischen Schwingungen anzuregen,
die mechanischen Schwingungen der schwingfähigen Einheit (4) zu empfangen und in ein erstes Empfangssignal (E_{A}) umzuwandeln,
ein Sendesignal (S) auszusenden und ein zweites Empfangssignals (Es) zu empfangen, und
wobei die Elektronik (6) dazu ausgestaltet ist, anhand des ersten (E_{A}) und/oder zweiten Empfangssignals (Es) die zumindest eine Prozessgröße (P) zu bestimmen,
**dadurch gekennzeichnet,**
**dass** die Sensoreinheit (2) ferner eine Einheit (13) zur Bestimmung und/oder Überwachung einer Temperatur (T) des Mediums (M) aufweist,
**dass** die Einheit (13) zur Bestimmung und/oder Überwachung der Temperatur (T) einen ersten (15a) und einen zweiten Temperatursensor (15b) umfasst, welcher erste (15a) und zweite Temperatursensor (15b) voneinander beabstandet angeordnet sind,
**dass** die Elektronik (6) dazu ausgestaltet ist, anhand eines ersten und/oder zweiten von der Einheit empfangenen Temperatur-Empfangssignals des ersten (15a) und/oder zweiten Temperatursensors (15b) die Temperatur (T) des Mediums (M) zu bestimmen, dass der erste Temperatursensor (15a) derart angeordnet und/oder dazu ausgestaltet ist, eine erste Temperatur (T1) in einem ersten dem Medium (M) zugewandten Endbereich (B1) der Sensoreinheit (2) zu erfassen, und
**dass** der zweite Temperatursensor (15b) derart angeordnet und/oder dazu ausgestaltet ist, eine zweite Temperatur (T2) in einem zweiten, dem Medium (M) abgewandten Endbereich (B2) der Sensoreinheit (2), insbesondere in einem Bereich, in welchem das zumindest eine piezoelektrische Element (11a, 11b) angeordnet ist, zu erfassen.

2. Vorrichtung nach Anspruch 1,
wobei die Sensoreinheit (2) zumindest ein erstes (11a) und ein zweites piezoelektrisches Element (11b) umfasst,
wobei das erste (11a) und zweite piezoelektrische Element (11b) dazu ausgestaltet sind, die mechanisch schwingfähige Einheit (4) mittels eines Anregesignals (A) zu mechanischen Schwingungen anzuregen und die mechanischen Schwingungen der schwingfähigen Einheit (4) zu empfangen und in ein erstes Empfangssignal (E_{A}) umzuwandeln,
wobei das erste piezoelektrische Element (11a) dazu ausgestaltet ist, ein Sendesignal (S) auszusenden, und
wobei das zweite piezoelektrische Element (11b) dazu ausgestaltet ist, das Sendesignal (S) in Form eines zweiten Empfangssignals (E_{S}) zu empfangen.

3. Vorrichtung (1) nach Anspruch 1 oder 2,
wobei die mechanisch schwingfähige Einheit (4) eine Schwinggabel mit einem ersten (9a) und einem zweiten Schwingelement (9b) ist, und wobei das erste piezoelektrische Element (11a) zumindest teilweise in dem ersten Schwingelement (9a) und das zweite piezoelektrische Element (11b) zumindest teilweise in dem zweiten Schwingelement (9b) angeordnet ist.

4. Vorrichtung (1) nach einem der Ansprüche 1 bis 3,
wobei die Einheit (13) zur Bestimmung und/oder Überwachung einer Temperatur (T) ein stabförmiges Gehäuseelement (14) umfasst, welches derart angeordnet ist, dass eine Längsachse des Gehäuseelements (14) parallel zu einer Längsachse der schwingfähigen Einheit (4) ist, und
wobei der erste Temperatursensor (15a) in einem ersten, dem Medium (M) zugewandten Endbereich (B1) des Gehäuseelements (14) angeordnet ist, und wobei der zweite Temperatursensor (15b) in einem zweiten, dem Medium (M) abgewandten Endbereich (B2) des Gehäuseelements (14) angeordnet ist.

5. Verfahren zur Bestimmung und/oder Überwachung von zumindest einer Prozessgröße (P) eines Mediums (M), wobei
- eine Sensoreinheit (2) mittels eines Anregesignals (A) zu mechanischen Schwingungen angeregt wird,
- die mechanischen Schwingungen von der Sensoreinheit (2) empfangen und in ein erstes Empfangssignal (E_{A}) umgewandelt werden,
- von der Sensoreinheit (2) ein Sendesignal (S) ausgesendet und ein zweites Empfangssignal (E_{S}) empfangen wird, und
- anhand des ersten (E_{A}) und/oder zweiten Empfangssignals (E_{S}) die zumindest eine Prozessgröße (P),
**dadurch gekennzeichnet,**
- **dass** anhand eines ersten und/oder eines zweiten von einem ersten (15a) und/oder zweiten Temperatursensor (15b) empfangenen Temperatur-Empfangssignals ein erster und/oder zweiter Wert für zumindest eine Temperatur (T) ermittelt wird, und
- **dass** mittels des ersten Temperatursensors (15a) ein Wert für eine erste Temperatur (T1) in einem dem Medium (M) zugewandten Endbereich (B1) der Sensoreinheit (2) und/oder mittels des zweiten Temperatursensors (15b) ein Wert für eine zweite Temperatur (T2) in einem dem Medium (M) abgewandten Endbereich (B2) der Sensoreinheit (2) erfasst wird.

6. Verfahren nach Anspruch 5,
wobei zumindest zwei unterschiedliche Prozessgrößen (P1, P2) ermittelt werden, wobei eine erste Prozessgröße (P1) anhand des ersten Empfangssignals (E_{A}) ermittelt wird, und wobei eine zweite Prozessgröße (P2) anhand des zweiten Empfangssignals (Es) ermittelt wird.

7. Verfahren nach zumindest einem der Ansprüche 5 oder 6,
wobei es sich bei der zumindest einen Prozessgröße (P) um einen vorgebaren Füllstand, die Dichte, die Viskosität, die Schallgeschwindigkeit oder eine aus zumindest einer dieser Größen abgeleitete Größe handelt.

8. Verfahren nach zumindest einem der Ansprüche 5 bis 7,
wobei ein Einfluss der Temperatur (T) des Mediums (M) auf das erste (E_{A}) und/oder zweite Empfangssignal (E_{S}) bzw. auf die erste (P1) und/oder zweite Prozessgröße (P2) kompensiert wird.

9. Verfahren nach zumindest einem der Ansprüche 5 bis 8,
wobei jeweils eine Temperatur (T, T1, T2) zur Ermittlung jeweils einer der Prozessgrößen (P1, P2) herangezogen wird.

10. Verfahren nach einem der Ansprüche 5 bis 9,
wobei anhand des ersten und/oder zweiten Temperatur-Empfangssignals ein Einfluss der Temperatur (T) auf zumindest eine physikalische und/oder chemische Eigenschaft zumindest einer Komponente der Sensoreinheit (2), von welcher Eigenschaft die zumindest eine Prozessgröße (P) abhängt, kompensiert wird.

11. Verfahren nach zumindest einem der Ansprüche 5 bis 10,
wobei anhand einer elektromechanischen Effizienz oder einer Kapazität zumindest eines piezoelektrischen Elements (11a, 11b) der Sensoreinheit (2) ein Wert für die erste (T1) und/oder zweite Temperatur (T2) ermittelt wird,
wobei der anhand des ersten und/oder zweiten Temperatur-Empfangssignals und der anhand der elektromechanischen Effizienz oder der Kapazität ermittelte Wert für die erste (T1) und/oder zweite Temperatur (T2) miteinander verglichen werden, und wobei insbesondere im Falle, dass eine Abweichung zwischen den anhand des ersten und/oder zweiten Temperatur-Empfangssignals und der anhand der elektromechanischen Effizienz oder der Kapazität ermittelten Werten einen vorgebbaren Grenzwert überschreitet, eine Aussage über das zumindest eine piezoelektrische Element (11a, 11b) oder des ersten (15a) und/oder zweiten Temperatursensors (15b) gemacht wird.

12. Verfahren nach zumindest einem der Ansprüche 5 bis 11,
wobei anhand einer Differenz der anhand des ersten und zweiten Temperatur-Empfangssignals ermittelten Werte für die erste (T1) und zweite Temperatur (T2) eine Wärmeableitung, insbesondere ein Wärmeableitung im Bereich der Sensoreinheit (2) ermittelt wird, und
wobei insbesondere im Falle, dass die Differenz einen vorgebbaren Grenzwert überschreitet, eine Warnung ausgegeben wird.

## Claims

1. Device (1) for determining and/or monitoring at least one process variable (P) of a medium (M) comprising
a sensor unit (2) with
a mechanically vibrating unit (4), and
at least one first piezoelectric element (11a),
and with
electronics (6)
wherein the device (1) is designed for this purpose,
to excite the mechanically vibrating unit (4) to mechanical vibrations by means of an excitation signal (A),
to receive the mechanical vibrations of the vibrating unit (4) and convert them into a first received signal (E), a
to transmit a transmit signal (S) and to receive a second receive signal (E_{S} ), and wherein the electronics (6) is designed to determine the at least one process variable (P) using the first (E_{A}) and/or second received signal (E_{S} ),
**characterised in that**
**in that** the sensor unit (2) also has a unit (13) for determining and/or monitoring a temperature (T) of the medium (M),
**in that** the unit (13) for determining and/or monitoring the temperature (T) comprises a first (15a) and a second temperature sensor (15b), which first (15a) and second temperature sensor (15b) are arranged at a distance from one another,
**in that** the electronics (6) is designed to determine the temperature (T) of the medium (M) on the basis of a first and/or second temperature reception signal of the first (15a) and/or second temperature sensor (15b) received by the unit,
**in that** the first temperature sensor (15a) is arranged and/or designed to detect a first temperature (T1) in a first end region (B1) of the sensor unit (2) facing the medium (M), and
**in that** the second temperature sensor (15b) is arranged and/or designed to detect a second temperature (T2) in a second end region (B2) of the sensor unit (2) facing away from the medium (M), in particular in a region in which the at least one piezoelectric element (11a, 11b) is arranged.

2. Device according to claim 1,
wherein the sensor unit (2) comprises at least a first (11a) and a second piezoelectric element (11b),
wherein the first (11a) and second piezoelectric element (11b) are designed to excite the mechanically vibrating unit (4) to mechanical vibrations by means of an excitation signal (A) and to receive the mechanical vibrations of the vibrating unit (4) and convert them into a first received signal (E ),_{A}
wherein the first piezoelectric element (11a) is configured to emit a transmission signal (S), and
wherein the second piezoelectric element (11b) is designed to receive the transmit signal (S) in the form of a second receive signal (E_{S} ).

3. Device (1) according to claim 1 or 2,
wherein the mechanically oscillatable unit (4) is a tuning fork with a first (9a) and a second oscillating element (9b), and wherein the first piezoelectric element (11a) is arranged at least partially in the first oscillating element (9a) and the second piezoelectric element (11b) is arranged at least partially in the second oscillating element (9b).

4. Device (1) according to any one of claims 1 to 3,
wherein the unit (13) for determining and/or monitoring a temperature (T) comprises a rod-shaped housing element (14), which is arranged in such a way that a longitudinal axis of the housing element (14) is parallel to a longitudinal axis of the vibrating unit (4), and
wherein the first temperature sensor (15a) is arranged in a first end region (B1) of the housing element (14) facing the medium (M), and wherein the second temperature sensor (15b) is arranged in a second end region (B2) of the housing element (14) facing away from the medium (M).

5. Method for determining and/or monitoring at least one process variable (P) of a medium (M), wherein
- a sensor unit (2) is excited to mechanical vibrations by means of an excitation signal (A),
- the mechanical vibrations are received by the sensor unit (2) and converted into a first received signal (E ),_{A}
- a transmit signal (S) is transmitted by the sensor unit (2) and a second receive signal (E_{S} ) is received, and
- the at least one process variable (P) on the basis of the first (E_{A}) and/or second received signal (Es),
**characterised in that**
- **in that** a first and/or a second temperature reception signal received from a first (15a) and/or a second temperature sensor (15b) is used to determine a first and/or second value for at least one temperature (T), and
- **in that** a value for a first temperature (T1) in an end region (B1) of the sensor unit (2) facing the medium (M) is detected by means of the first temperature sensor (15a) and/or a value for a second temperature (T2) in an end region (B2) of the sensor unit (2) facing away from the medium (M) is detected by means of the second temperature sensor (15b).

6. Method according to claim 5,
wherein at least two different process variables (P1, P2) are determined, wherein a first process variable (P1) is determined using the first received signal (E_{A} ), and wherein a second process variable (P2) is determined using the second received signal (E ). s

7. Method according to at least one of claims 5 or 6,
where the at least one process variable (P) is a predetermined filling level, density, viscosity, sonic velocity or a variable derived from at least one of these variables.

8. Method according to at least one of claims 5 to 7,
whereby an influence of the temperature (T) of the medium (M) on the first (E_{A} ) and/or second received signal (E_{S} ) or on the first (P1) and/or second process variable (P2) is compensated.

9. Method according to at least one of claims 5 to 8,
whereby a temperature (T, T1, T2) is used to determine one of the process variables (P1, P2) in each case.

10. Method according to any one of claims 5 to 9,
wherein an influence of the temperature (T) on at least one physical and/or chemical property of at least one component of the sensor unit (2), on which property the at least one process variable (P) depends, is compensated by means of the first and/or second temperature reception signal.

11. Method according to at least one of claims 5 to 10,
wherein a value for the first (T1) and/or second temperature (T2) is determined on the basis of an electromechanical efficiency or a capacitance of at least one piezoelectric element (11a, 11b) of the sensor unit (2),
wherein the value for the first (T1) and/or second temperature (T2) determined from the first and/or second temperature reception signal and the value for the electromechanical efficiency or capacitance are compared with each other, and
wherein, in particular in the event that a deviation between the values determined using the first and/or second temperature reception signal and the values determined using the electromechanical efficiency or the capacitance exceeds a predeterminable limit value, a statement is made about the at least one piezoelectric element (11a, 11b) or the first (15a) and/or second temperature sensor (15b).

12. Method according to at least one of claims 5 to 11,
wherein a heat dissipation, in particular a heat dissipation in the region of the sensor unit (2), is determined on the basis of a difference between the values for the first (T1) and second (T2) temperatures determined on the basis of the first and second temperature reception signals, and
whereby a warning is issued in particular if the difference exceeds a presettable limit value.

## Revendications

1. Dispositif (1) pour la détermination et/ou la surveillance d'au moins une grandeur de processus (P) d'un milieu (M) comprenant
une unité de détection (2) comprenant
d'une unité vibrant mécaniquement (4), et
au moins un premier élément piézoélectrique (11a),
et avec
d'une électronique (6)
le dispositif (1) étant conçu à cet effet,
d'exciter l'unité (4) capable d'oscillations mécaniques au moyen d'un signal d'excitation (A) pour obtenir des oscillations mécaniques,
de recevoir les vibrations mécaniques de l'unité vibrante (4) et de les convertir en un premier signal de réception (E ), a
d'émettre un signal d'émission (S) et de recevoir un deuxième signal de réception (E_{S} ), et
l'électronique (6) étant conçue pour déterminer l'au moins une grandeur de processus (P) à l'aide du premier (E_{A}) et/ou du deuxième signal de réception (E_{S} ),
**caractérisé en ce que**
que l'unité de détection (2) présente en outre une unité (13) pour déterminer et/ou surveiller une température (T) du milieu (M),
que l'unité (13) de détermination et/ou de surveillance de la température (T) comprend un premier (15a) et un deuxième capteur de température (15b), lesquels premier (15a) et deuxième (15b) capteurs de température sont disposés à distance l'un de l'autre,
que l'électronique (6) est conçue pour déterminer la température (T) du milieu (M) à l'aide d'un premier et/ou d'un deuxième signal de réception de température du premier (15a) et/ou du deuxième capteur de température (15b) reçu par l'unité,
**en ce que** le premier capteur de température (15a) est disposé et/ou conçu de manière à détecter une première température (T1) dans une première zone d'extrémité (B1) de l'unité de capteur (2) tournée vers le milieu (M), et
**en ce que** le deuxième capteur de température (15b) est disposé et/ou conçu de manière à détecter une deuxième température (T2) dans une deuxième zone d'extrémité (B2) de l'unité de capteur (2), opposée au milieu (M), en particulier dans une zone dans laquelle est disposé l'au moins un élément piézoélectrique (11a, 11b).

2. Dispositif selon la revendication 1,
dans lequel l'unité de capteur (2) comprend au moins un premier (11a) et un second (11b) éléments piézoélectriques,
le premier (11a) et le deuxième (11b) éléments piézoélectriques étant conçus pour exciter l'unité (4) capable de vibrer mécaniquement en vibrations mécaniques au moyen d'un signal d'excitation (A) et pour recevoir les vibrations mécaniques de l'unité (4) capable de vibrer et les convertir en un premier signal de réception (E_{A} ),
dans lequel le premier élément piézoélectrique (11a) est configuré pour émettre un signal d'émission (S), et
dans lequel le deuxième élément piézoélectrique (11b) est conçu pour recevoir le signal d'émission (S) sous la forme d'un deuxième signal de réception (E_{S} ).

3. Dispositif (1) selon la revendication 1 ou 2,
dans lequel l'unité (4) capable de vibrer mécaniquement est une fourche vibrante ayant un premier (9a) et un deuxième élément (9b) vibrant, et dans lequel le premier élément (11a) piézoélectrique est disposé au moins partiellement dans le premier élément (9a) vibrant et le deuxième élément (11b) piézoélectrique est disposé au moins partiellement dans le deuxième élément (9b) vibrant.

4. Dispositif (1) selon l'une quelconque des revendications 1 à 3,
dans lequel l'unité (13) pour déterminer et/ou surveiller une température (T) comprend un élément de boîtier en forme de tige (14) qui est disposé de telle sorte qu'un axe longitudinal de l'élément de boîtier (14) est parallèle à un axe longitudinal de l'unité vibrante (4), et
le premier capteur de température (15a) étant disposé dans une première zone d'extrémité (B1), tournée vers le milieu (M), de l'élément de boîtier (14), et le deuxième capteur de température (15b) étant disposé dans une deuxième zone d'extrémité (B2), opposée au milieu (M), de l'élément de boîtier (14).

5. Procédé de détermination et/ou de surveillance d'au moins une grandeur de processus (P) d'un milieu (M), dans lequel
- une unité de capteur (2) est excitée en vibrations mécaniques au moyen d'un signal d'excitation (A),
- les vibrations mécaniques sont reçues par l'unité de détection (2) et converties en un premier signal de réception (E_{A} ),
- un signal d'émission (S) est émis par l'unité de détection (2) et un deuxième signal de réception (Es) est reçu, et
- à l'aide du premier (E_{A}) et/ou du deuxième signal de réception (E_{S} ), l'au moins une grandeur de processus (P),
**caractérisé en ce que**
- **en ce qu'**à l'aide d'un premier et/ou d'un deuxième signal de réception de température reçu par un premier (15a) et/ou un deuxième capteur de température (15b), on détermine une première et/ou une deuxième valeur pour au moins une température (T), et
- qu'une valeur pour une première température (T1) est détectée au moyen du premier capteur de température (15a) dans une zone d'extrémité (B1) de l'unité de capteur (2) tournée vers le milieu (M) et/ou qu'une valeur pour une deuxième température (T2) est détectée au moyen du deuxième capteur de température (15b) dans une zone d'extrémité (B2) de l'unité de capteur (2) opposée au milieu (M).

6. Procédé selon la revendication 5,
au moins deux grandeurs de processus différentes (P1, P2) étant déterminées, une première grandeur de processus (P1) étant déterminée à l'aide du premier signal de réception (E_{A} ), et une deuxième grandeur de processus (P2) étant déterminée à l'aide du deuxième signal de réception (E ). _{S}

7. Procédé selon au moins l'une des revendications 5 ou 6,
l'au moins une grandeur de processus (P) étant un niveau de remplissage prédéfini, la densité, la viscosité, la vitesse du son ou une grandeur dérivée d'au moins une de ces grandeurs.

8. Procédé selon au moins l'une des revendications 5 à 7,
une influence de la température (T) du milieu (M) sur le premier (E_{A} ) et/ou le deuxième signal de réception (Es) ou sur la première (P1) et/ou la deuxième grandeur de processus (P2) étant compensée.

9. Procédé selon au moins l'une des revendications 5 à 8,
une température (T, T1, T2) étant respectivement utilisée pour déterminer respectivement l'une des grandeurs de processus (P1, P2).

10. Procédé selon l'une quelconque des revendications 5 à 9,
une influence de la température (T) sur au moins une propriété physique et/ou chimique d'au moins un composant de l'unité de capteur (2), propriété dont dépend l'au moins une grandeur de processus (P), étant compensée à l'aide du premier et/ou du deuxième signal de réception de température.

11. Procédé selon au moins l'une des revendications 5 à 10,
une valeur pour la première (T1) et/ou la deuxième température (T2) étant déterminée à l'aide d'une efficacité électromécanique ou d'une capacité d'au moins un élément piézoélectrique (11a, 11b) de l'unité de détection (2),
dans lequel la valeur déterminée à l'aide du premier et/ou du deuxième signal de réception de température et la valeur déterminée à l'aide de l'efficacité électromécanique ou de la capacité pour la première (T1) et/ou la deuxième température (T2) sont comparées l'une à l'autre, et
dans lequel, en particulier dans le cas où un écart entre les valeurs déterminées à l'aide du premier et/ou du deuxième signal de réception de température et les valeurs déterminées à l'aide de l'efficacité électromécanique ou de la capacité dépasse une valeur limite pouvant être prédéfinie, on fait une déclaration concernant l'au moins un élément piézoélectrique (11a, 11b) ou le premier (15a) et/ou le deuxième capteur de température (15b).

12. Procédé selon au moins l'une des revendications 5 à 11,
une dissipation de chaleur, en particulier une dissipation de chaleur dans la zone de l'unité de capteur (2), étant déterminée à l'aide d'une différence des valeurs déterminées à l'aide du premier et du deuxième signal de réception de température pour la première (T1) et la deuxième température (T2), et
un avertissement étant émis en particulier dans le cas où la différence dépasse une valeur limite pouvant être prédéfinie.
